# EUROPEAN PATENT APPLICATION

(11) **EP 4 435 509 A1**
(43) Date of publication of application: **25.09.2024**
(21) Application number: 21964700.5
(22) Date of filing: 17.11.2021
(51) Int. Cl.: G02F 3/00, G02B 6/12

(54) **QUANTUM DEVICE AND QUANTUM OPERATION APPARATUS**

(71) Applicant: FUJITSU LIMITED, Kawasaki-shi, Kanagawa 211-8588 (JP)
(72) Inventor: IWAI, Toshiki, Kawasaki-shi, Kanagawa 211-8588 (JP); DOI, Yoshiyasu, Kawasaki-shi, Kanagawa 211-8588 (JP); KAWAGUCHI, Kenichi, Kawasaki-shi, Kanagawa 211-8588 (JP); ISHIGURO, Tetsuro, Kawasaki-shi, Kanagawa 211-8588 (JP); MIYATAKE, Tetsuya, Kawasaki-shi, Kanagawa 211-8588 (JP); SATO, Shintaro, Kawasaki-shi, Kanagawa 211-8588 (JP)
(74) Representative: Hoffmann Eitle
(86) International application number: PCT/JP2021/042187
(87) International publication number: WO 2023/089684

(57) **Abstract**

A quantum device includes: a first optical waveguide configured to include diamond; and a second optical waveguide optically configured to be coupled to the first optical waveguide and include a material with a lower refractive index than diamond, wherein the first optical waveguide includes a first region configured to include a color center, a second region that propagates light that propagates in the first region to the second optical waveguide, and a third region connected to a side of the second region opposite to the first region and bonded to the second optical waveguide.

## Description

### FIELD

The present disclosure relates to a quantum device and a quantum operation device.

### BACKGROUND

As one of next-generation computing, a quantum computer has been researched and developed. There is a method for performing a quantum operation using a spin and a photon of a diamond color center that is a quantum element as quantum bits. This quantum operation is performed by entangling the photons emitted from diamond at a cryogenic temperature of about -270°C. The entanglement of the photons is performed via an optical waveguide including sapphire or the like that is optically coupled to a diamond optical waveguide including the color center.

### SUMMARY

### TECHNICAL PROBLEM

A thermal expansion coefficient of a diamond optical waveguide and a thermal expansion coefficient of an optical waveguide coupled to the diamond optical waveguide are greatly different. Therefore, even if bonding is performed with high accuracy at room temperature, when the optical waveguide is cooled to a cryogenic temperature of about -270°C, an amount of thermal deformation greatly differs. Therefore, a light propagation loss may increase due to distortion. Furthermore, these two optical waveguides are separated, and the light propagation loss may increase due to the separation.

An object of the present disclosure is to provide a quantum device and a quantum operation device that can suppress an increase in a light propagation loss caused by thermal deformation.

### SOLUTION TO PROBLEM

According to one aspect of the present disclosure, a quantum device is provided that includes a first optical waveguide including diamond and a second optical waveguide optically coupled to the first optical waveguide and including a material having a lower refractive index than diamond, in which the first optical waveguide includes a first region including a color center, a second region that propagates light propagating in the first region to the second optical waveguide, and a third region connected to a side of the second region opposite to the first region and bonded to the second optical waveguide.

### SOLUTION TO PROBLEM

According to an aspect of the embodiments, there is provided a quantum device includes: a first optical waveguide configured to include diamond; and a second optical waveguide optically configured to be coupled to the first optical waveguide and include a material with a lower refractive index than diamond, wherein the first optical waveguide includes a first region configured to include a color center, a second region that propagates light that propagates in the first region to the second optical waveguide, and a third region connected to a side of the second region opposite to the first region and bonded to the second optical waveguide.

### ADVANTAGEOUS EFFECTS OF INVENTION

According to the present disclosure, it is possible to suppress an increase in a light propagation loss caused by thermal deformation.

### BRIEF DESCRIPTION OF DRAWINGS

FIG. 1 is a top view illustrating a quantum device according to a first embodiment.
FIG. 2 is a cross-sectional diagram illustrating the quantum device according to the first embodiment.
FIG. 3 is a top view illustrating a quantum device according to a second embodiment.
FIG. 4 is a cross-sectional diagram illustrating a quantum device according to a third embodiment.
FIG. 5 is a cross-sectional diagram illustrating a quantum device according to a fourth embodiment.
FIG. 6 is a top view illustrating a quantum device according to a fifth embodiment.
FIG. 7 is a cross-sectional diagram (part 1) illustrating the quantum device according to the fifth embodiment.
FIG. 8 is a cross-sectional diagram (part 2) illustrating the quantum device according to the fifth embodiment.
FIG. 9 is a cross-sectional diagram (part 1) illustrating a method for manufacturing the quantum device according to the fifth embodiment.
FIG. 10 is a cross-sectional diagram (part 2) illustrating the method for manufacturing the quantum device according to the fifth embodiment.
FIG. 11 is a cross-sectional diagram (part 3) illustrating the method for manufacturing the quantum device according to the fifth embodiment.
FIG. 12 is a cross-sectional diagram (part 4) illustrating the method for manufacturing the quantum device according to the fifth embodiment.
FIG. 13 is a cross-sectional diagram (part 5) illustrating the method for manufacturing the quantum device according to the fifth embodiment.
FIG. 14 is a cross-sectional diagram (part 6) illustrating the method for manufacturing the quantum device according to the fifth embodiment.
FIG. 15 is a cross-sectional diagram (part 7) illustrating the method for manufacturing the quantum device according to the fifth embodiment.
FIG. 16 is a diagram illustrating a quantum computer according to a sixth embodiment.
FIG. 17 is a diagram (part 1) illustrating a simulation result.
FIG. 18 is a partially enlarged view of FIG. 17.
FIG. 19 is a diagram (part 2) illustrating the simulation result.
FIG. 20 is a partially enlarged view of FIG. 19.
FIG. 21 is a diagram (part 3) illustrating the simulation result.
FIG. 22 is a partially enlarged view of FIG. 21.
FIG. 23 is an enlarged view of another part of FIG. 21.
FIG. 24 is a diagram (part 4) illustrating the simulation result.
FIG. 25 is a partially enlarged view of FIG. 24.
FIG. 26 is an enlarged view of another part of FIG. 24.
FIG. 27 is a diagram (part 5) illustrating the simulation result.
FIG. 28 is a partially enlarged view of FIG. 27.
FIG. 29 is an enlarged view of another part of FIG. 27.
FIG. 30 is a diagram (part 6) illustrating the simulation result.
FIG. 31 is a partially enlarged view of FIG. 30.
FIG. 32 is an enlarged view of another part of FIG. 30.
FIG. 33 is a diagram (part 7) illustrating the simulation result.
FIG. 34 is a partially enlarged view of FIG. 33.
FIG. 35 is an enlarged view of another part of FIG. 33.

### DESCRIPTION OF EMBODIMENTS

Hereinafter, embodiments of the present disclosure will be specifically described with reference to the attached drawings. Note that, in the present specification and drawings, components having substantially the same functional configuration are denoted with the same reference numeral, and redundant descriptions may be omitted. In the present disclosure, an X1-X2 direction, a Y1-Y2 direction, and a Z1-Z2 direction are directions orthogonal to each other. A plane including the X1-X2 direction and the Y1-Y2 direction is described as an XY plane, a plane including the Y1-Y2 direction and the Z1-Z2 direction is described as a YZ plane, and a plane including the Z1-Z2 direction and the X1-X2 direction is described as a ZX plane. Note that, for convenience, the Z1-Z2 direction is set as a vertical direction, a Z1 side is set as an upper side, and a Z2 side is set as a lower side. Furthermore, plan view is to view an object from the Z1 side, and a planar shape is a shape of the object viewed from the Z1 side.

### (First Embodiment)

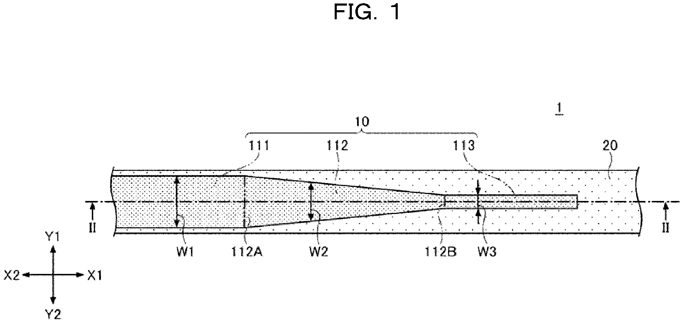

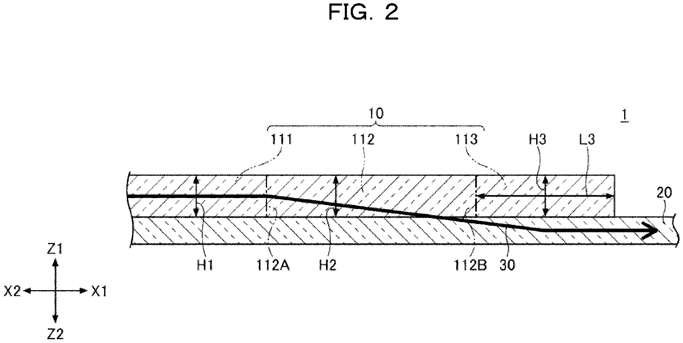

First, a first embodiment will be described. The first embodiment relates to a quantum device. The quantum device according to the first embodiment is used for a quantum operation device such as a quantum computer, for example. FIG. 1 is a top view illustrating the quantum device according to the first embodiment. FIG. 2 is a cross-sectional diagram illustrating the quantum device according to the first embodiment. FIG. 2 corresponds to a cross-sectional diagram taken along line II-II in FIG. 1.

As illustrated in FIGs. 1 and 2, a quantum device 1 according to the first embodiment includes a first optical waveguide 10 and a second optical waveguide 20. The first optical waveguide 10 includes diamond, and the second optical waveguide 20 includes a material having a refractive index lower than that of diamond. The material of the second optical waveguide 20 is, for example, sapphire, silicon, silicon carbide, silicon nitride, or silicon oxide, or any combination thereof. The first optical waveguide 10 is laminated on the second optical waveguide 20. The second optical waveguide 20 is optically coupled to the first optical waveguide 10.

The first optical waveguide 10 includes a first region 111, a second region 112, and a third region 113. The first region 111 includes a color center. The second region 112 propagates light that propagates in the first region 111 to the second optical waveguide 20. The third region 113 is connected to a side of the second region 112 opposite to the first region 111. The third region 113 is bonded to the second optical waveguide 20.

A height H1 and a width W1 of the first region 111 satisfy a single mode waveguide condition with respect to light 30 propagating in the first region 111. For example, the height H1 is 0.25 times to 0.50 times of a wavelength λ of the light 30, and the width W1 is 0.25 times to 0.60 times of the wavelength λ. In a case where the wavelength λ is 600 nm to 800 nm, the height H1 is 150 nm to 300 nm, and the width W1 may be 150 nm to 300 nm. As a specific example, in a case where the wavelength λ is 637 nm, the height H1 is 245 nm, and the width W1 is 284 nm. Note that the height H1 is a dimension of the first region 111 in a lamination direction (Z1-Z2 direction), and the width W1 is a dimension of the first region 111 in a direction (Y1-Y2 direction) perpendicular to the propagation direction (X1-X2 direction) of the light 30 in the first region 111 and the Z1-Z2 direction.

A height H2 of the second region 112 is equal to the height H1 of the first region 111, and a width W2 of the second region 112 decreases from a boundary 112A with the first region 111 toward a boundary 112B with the third region 113. A cross-sectional area of a cross section perpendicular to the X1-X2 direction of the second region 112 decreases from the boundary 112A toward the boundary 112B. For example, the width W2 and the cross-sectional area linearly decrease. The second region 112 has a trapezoidal planar shape. The width W2 of the second region 112 is a width in which a single mode cannot propagate light at the boundary 112B. For example, at the boundary 112B, the height H2 is 0.25 times to 0.50 times of the wavelength λ of the light 30, and the width W2 is 0.20 times to 0.60 times of the wavelength λ. In a case where the wavelength λ is 600 nm to 800 nm, at the boundary 112B, the height H2 is 150 nm to 300 nm, and the width W2 may be 50 nm to 150 nm. Note that the height H2 is a dimension of the second region 112 in the Z1-Z2 direction, and the width W2 is a dimension of the second region 112 in the Y1-Y2 direction. When the light 30 propagated through the first region 111 leaks to outside of the second region 112, the light 30 leaks to a region having a refractive index closest to the refractive index of diamond that is the material of the second region 112 in a surrounding region. Therefore, the light 30 is propagated to the second optical waveguide 20 including sapphire or the like.

A height H3 and a width W3 of the third region 113 are respectively equal to the height H2 and the width W2 of the second region 112 at the boundary 112B. The third region 113 has a rectangular planar shape. The light 30 hardly propagates in the third region 113. A length L3 of the third region 113 is, for example, equal to or more than 100 nm, and preferably, equal to or more than 500 nm. Note that the height H3 is a dimension of the third region 113 in the Z1-Z2 direction, the width W3 is a dimension of the third region 113 in the Y1-Y2 direction, and the length L3 is a dimension of the third region 113 in the X1-X2 direction.

In the quantum device 1 configured in this way, the light 30 emitted from the color center propagates in the first region 111, and propagates to the second optical waveguide 20 by the second region 112. The light 30 propagated to the second optical waveguide 20 is used for a quantum operation.

Furthermore, when the quantum device 1 is cooled to a cryogenic temperature of about -270°C at the time of the quantum operation, the first optical waveguide 10 and the second optical waveguide 20 are thermally contracted depending on thermal expansion coefficients of the respective materials. At this time, since the thermal expansion coefficients of the first optical waveguide 10 and the second optical waveguide 20 are different, stress acts on an interface between the first optical waveguide 10 and the second optical waveguide 20. This stress concentrates at a front end of the first optical waveguide 10 on an X1 side, and is lowered in the X1-X2 direction as being separated from the front end. Therefore, stress acting on the second region 112 and the vicinity thereof is reduced as compared with a case where the third region 113 is not provided. Therefore, it is possible to suppress an increase in a light propagation loss caused by thermal deformation.

### (Second Embodiment)

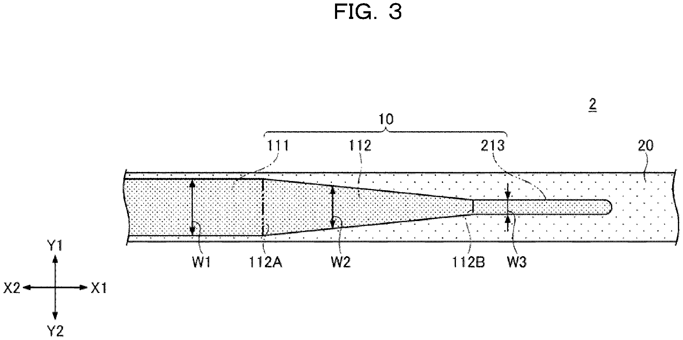

Next, a second embodiment will be described. The second embodiment is mainly different from the first embodiment in a configuration of the first optical waveguide. FIG. 3 is a top view illustrating a quantum device according to the second embodiment.

As illustrated in FIG. 3, a quantum device 2 according to the second embodiment includes a third region 213 instead of the third region 113. A side surface of an end portion of the third region 213 on an opposite side of the second region 112, that is, an end portion on the X1 side is a curved surface. Other components of the third region 213 are similar to those of the third region 113.

The other components are similar to those of the first embodiment.

In the second embodiment, effects similar to those of the first embodiment can be obtained. Furthermore, in the second embodiment, since the side surface of the end portion of the third region 213 on the X1 side is a curved surface, stress acting on the end portion of the third region 213 on the X1 side is easily dispersed. Therefore, separation and distortion of the third region 213 are suppressed, and propagation of the separation and the distortion generated in the third region 213 to the second region 112 can be suppressed, and it is possible to further suppress the increase in the light propagation loss.

### (Third Embodiment)

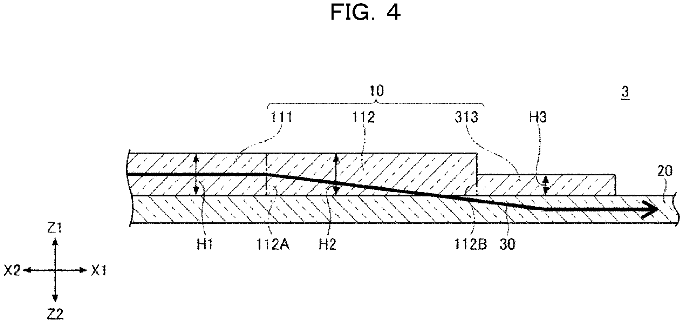

Next, a third embodiment will be described. The third embodiment is mainly different from the second embodiment in the configuration of the first optical waveguide. FIG. 4 is a cross-sectional diagram illustrating a quantum device according to the third embodiment.

As illustrated in FIG. 4, in a quantum device 3 according to the third embodiment, a third region 313 is provided instead of the third region 113. A height H3 of the third region 313 is smaller than the height H2 of the second region 112. Other components of the third region 313 are similar to those of the third region 113.

The other components are similar to those of the first embodiment.

In the third embodiment, effects similar to those of the second embodiment can be obtained. Furthermore, in the third embodiment, since the height H3 of the third region 313 is smaller than the height H2 of the second region 112, it is possible to suppress light propagation of the light propagated to the second region 112 to the third region 313.

Note that a planar shape of the third region 313 may be a rectangular shape similarly to the third region 113. That is, an end surface of the third region 313 may be a plane.

### (Fourth Embodiment)

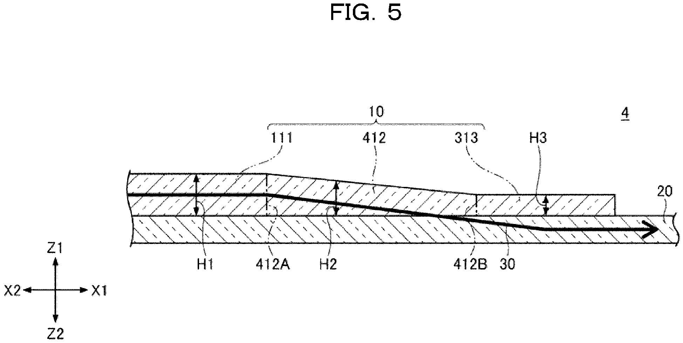

Next, a fourth embodiment will be described. The fourth embodiment is mainly different from the third embodiment in the configuration of the first optical waveguide. FIG. 5 is a cross-sectional diagram illustrating a quantum device according to the fourth embodiment.

As illustrated in FIG. 5, in a quantum device 4 according to the fourth embodiment, a second region 412 is provided instead of the second region 112. A height H2 of the second region 412 decreases from a boundary 412A with the first region 111 toward a boundary 412B with the third region 313. Therefore, a cross-sectional area of a cross section perpendicular to the X1-X2 direction of the second region 412 decreases from the boundary 412A toward the boundary 412B. For example, the height H2, the width W2, and the cross-sectional area linearly decrease. The height H2 of the second region 412 is a height in which a single mode cannot propagate light at the boundary 412B. For example, at the boundary 412B, the height H2 is 0.20 times to 0.50 times of the wavelength λ of the light 30, and the width W2 is 0.20 times to 0.60 times of the wavelength λ. In a case where the wavelength λ of the light 30 is 600 nm to 800 nm, at the boundary 412B, the height H2 of the second region 412 is equal to the height H3 of the third region 313. For example, the height H3 may be 50 nm to 150 nm. Other components of the second region 412 are similar to those of the second region 112.

The other components are similar to those of the third embodiment.

In the fourth embodiment, effects similar to those of the third embodiment can be obtained. Furthermore, in the fourth embodiment, since the height H2 of the second region 412 decreases from the boundary 412A toward the boundary 412B, the light 30 can be easily propagated to the second optical waveguide 20 by the second region 112.

### (Fifth Embodiment)

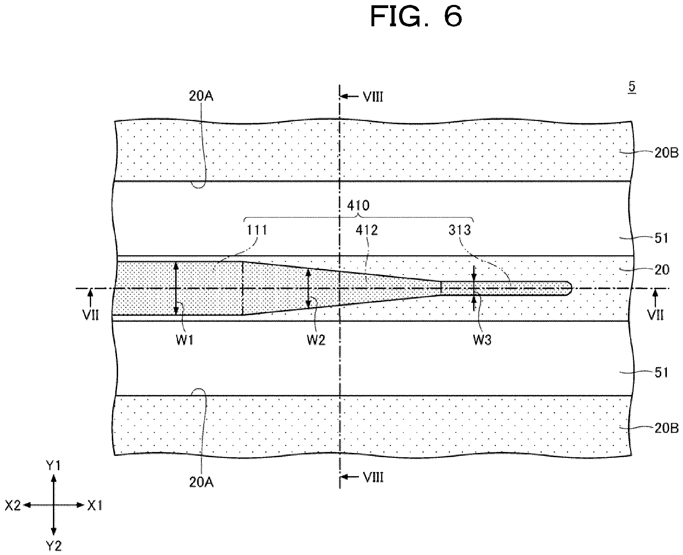

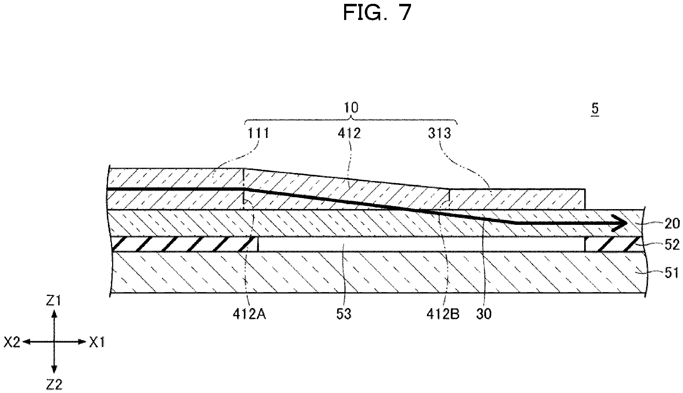

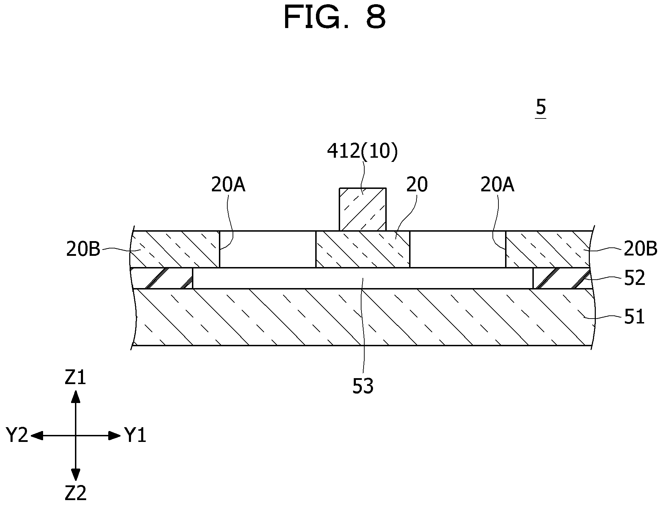

Next, a fifth embodiment will be described. The fifth embodiment is mainly different from the fourth embodiment in a configuration below the second optical waveguide. FIG. 6 is a top view illustrating a quantum device according to the fifth embodiment. FIGs. 7 and 8 are cross-sectional diagrams illustrating the quantum device according to the fifth embodiment. FIG. 7 corresponds to a cross-sectional diagram taken along line VII-VII in FIG. 6. FIG. 8 corresponds to a cross-sectional diagram taken along line VIII-VIII in FIG. 6.

As illustrated in FIGs. 6 to 8, a quantum device 5 according to the fifth embodiment includes a substrate 51 and a cladding layer 52, in addition to the structure of the fourth embodiment. The cladding layer 52 is provided on the substrate 51. The second optical waveguide 20 is provided on the cladding layer 52. For example, a material of the substrate 51 is a sapphire substrate, and a material of the cladding layer 52 is silicon oxide (SiO₂).

A hollow portion 53 is formed in the cladding layer 52. The hollow portion 53 is formed on a Z2 side of (below) the second region 412. The hollow portion 53 may be formed in the cladding layer 52, from a portion of the second region 412 on the Z2 side to a portion of the third region 313 on the Z2 side.

An optical waveguide layer 20B is provided on the cladding layer 52, and a groove 20A is formed between the optical waveguide layer 20B and the second optical waveguide 20. A material of the optical waveguide layer 20B is the same as the material of the second optical waveguide 20.

In the fifth embodiment, effects similar to those of the fourth embodiment can be obtained. Furthermore, in the fifth embodiment, the second optical waveguide 20 is provided on the substrate 51 via the cladding layer 52, and the hollow portion 53 is formed in the cladding layer 52. Therefore, stress acting on the second region 412 and the vicinity thereof is relaxed by thermal deformation. Therefore, it is possible to further suppress the increase in the light propagation loss caused by the thermal deformation.

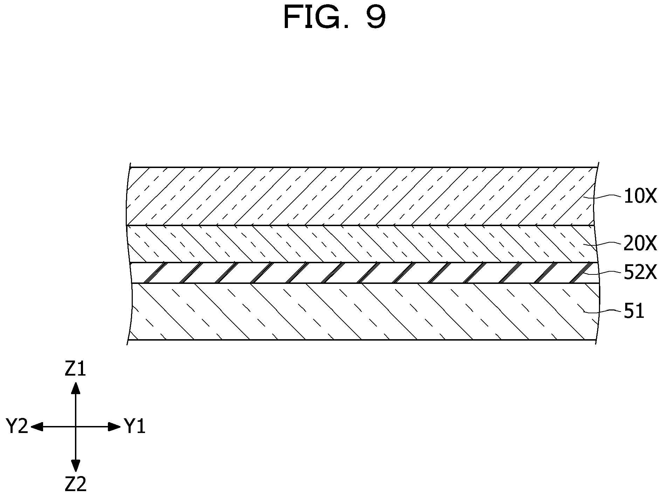

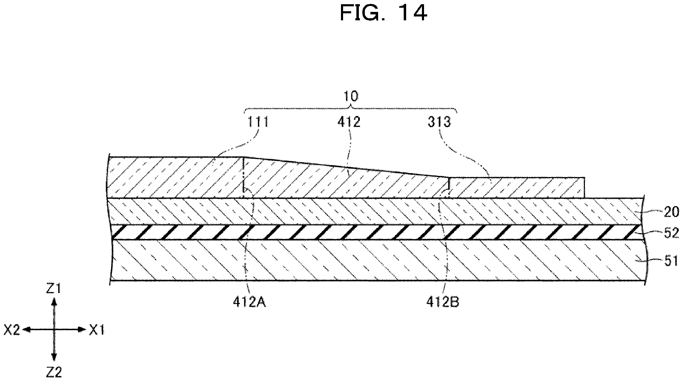

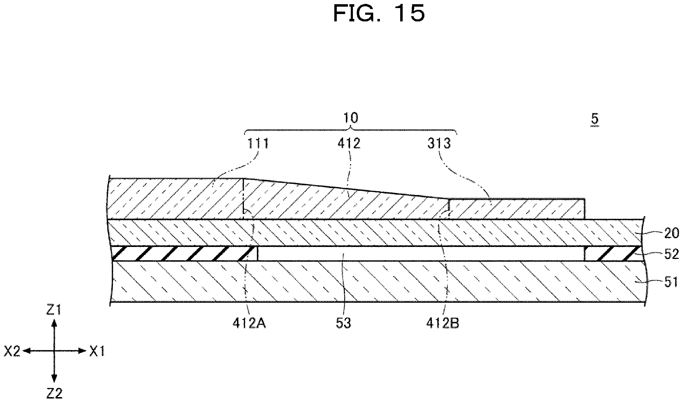

Next, a method for manufacturing the quantum device according to the fifth embodiment will be described. FIGs. 9 to 15 are cross-sectional diagrams illustrating the method for manufacturing the quantum device according to the fifth embodiment. FIGs. 9 to 13 illustrate changes of a cross section taken along line VIII-VIII in FIG. 6. FIGs. 14 and 15 illustrate changes of a cross section taken along line VII-VII in FIG. 6.

First, as illustrated in FIG. 9, a substrate including the substrate 51, a cladding layer 52X, and an optical waveguide layer 20X is prepared. A material of the cladding layer 52X is the same as the material of the cladding layer 52 and is, for example, silicon oxide. A material of the optical waveguide layer 20X is the same as the material of the second optical waveguide 20 and is, for example, sapphire. Next, a diamond layer 10X is provided on the optical waveguide layer 20X. For example, a diamond layer thicker than the height H3 of the first region 111 to be formed is formed, and the diamond layer is thinned until the thickness of the diamond layer becomes equal to the height H3.

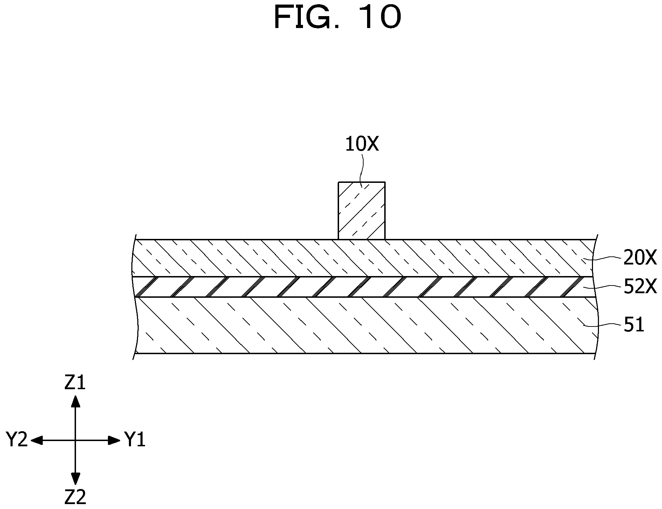

Thereafter, as illustrated in FIG. 10, the diamond layer 10X is processed into a planar shape of the first optical waveguide 10. In the processing of the diamond layer 10X, for example, formation of an electron beam (EB) resist, exposure using an EB exposure machine, development of the EB resist, and plasma etching using oxygen gas are performed in this order. Photoresist may be used instead of the EB resist. Furthermore, wet etching may be performed as etching. The diamond layer 10X may be processed using a focused ion beam (FIB).

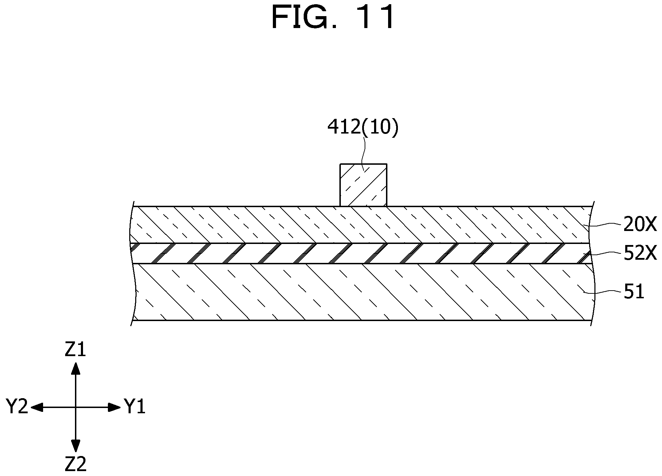

Subsequently, as illustrated in FIGs. 11 and 14, the diamond layer 10X is three-dimensionally processed, and the first optical waveguide 10 including the first region 111, the second region 412, and the third region 313 is formed. The diamond layer 10X is processed, for example, using the FIB. The diamond layer 10X may be processed through a plurality of times of photolithography, and the diamond layer 10X may be processed through a plurality of times of EB exposure.

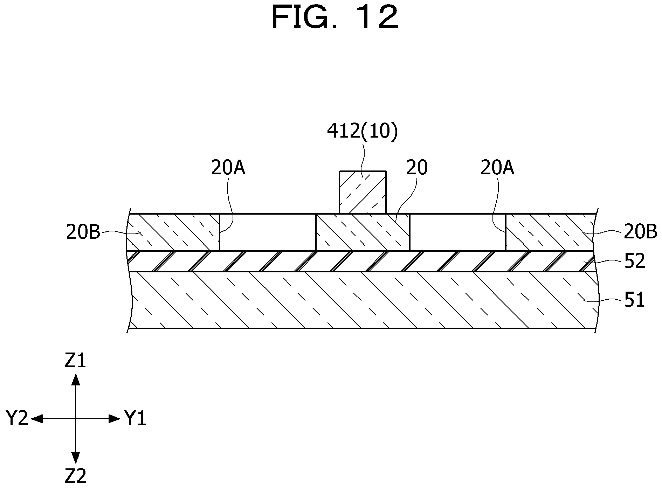

Next, as illustrated in FIG. 12, the optical waveguide layer 20X is processed, and the second optical waveguide 20 is formed. In the processing of the optical waveguide layer 20X, for example, the groove 20A is formed around the second optical waveguide 20, and the optical waveguide layer 20B is left around the groove 20A. In the processing of the optical waveguide layer 20X, for example, the formation of the EB resist, the exposure using the EB exposure machine, the development of the EB resist, and plasma etching using chlorine-based gas are performed in this order. The photoresist may be used instead of the EB resist. Furthermore, the wet etching may be performed as the etching.

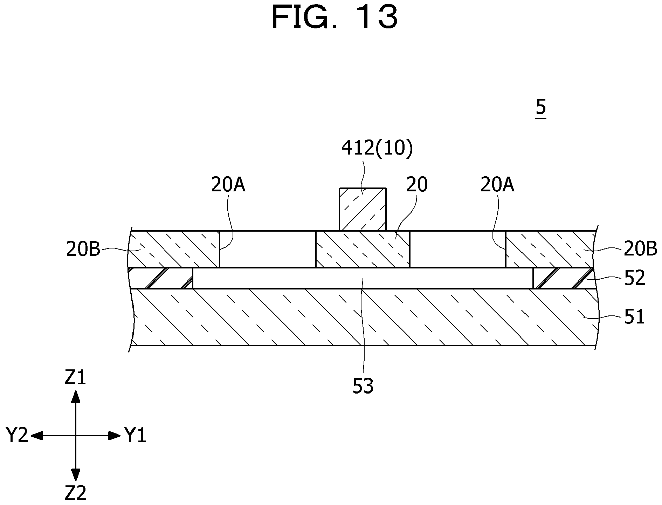

Thereafter, as illustrated in FIGs. 13 and 15, by processing the cladding layer 52X, the cladding layer 52 in which the hollow portion 53 is formed is obtained. In the processing of the cladding layer 52X, for example, vaporized hydrofluoric acid is used to perform etching through the groove 20A.

In this way, the quantum device 5 according to the fifth embodiment can be manufactured.

Note that, in the first to the fifth embodiments, the cross-sectional area of the cross section perpendicular to the X1-X2 direction of the third region does not need to be equal to a cross-sectional area S0 at the boundary between the second region and the third region and may be less than the cross-sectional area S0. Furthermore, the height H3 of the third region does not need to be equal to the height H2 at the boundary between the second region and the third region, and may be less than the height H2, and the width W3 of the third region does not need to be equal to the width W2 at the boundary between the second region and the third region and may be less than the width W2.

### (Sixth Embodiment)

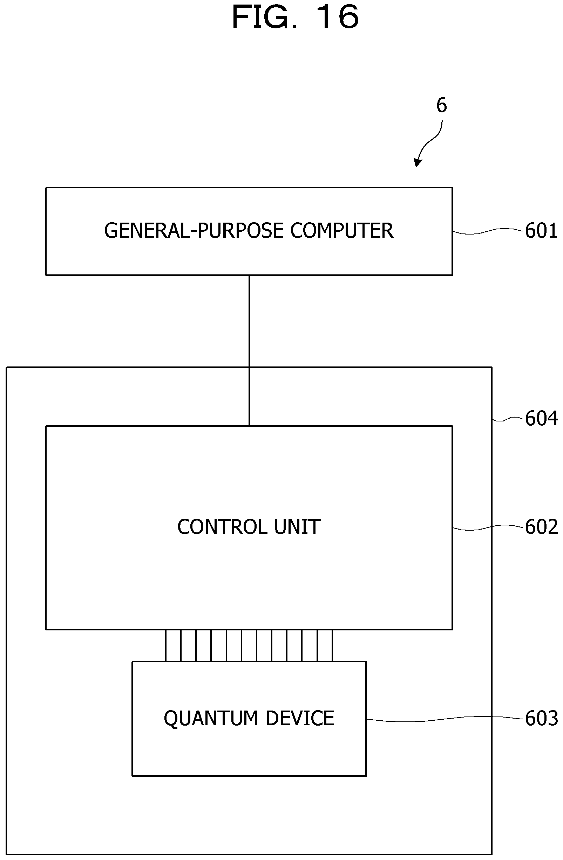

Next, a sixth embodiment will be described. The sixth embodiment relates to a quantum computer. FIG. 16 is a diagram illustrating the quantum computer according to the sixth embodiment.

A quantum computer 6 according to the sixth embodiment includes a general-purpose computer 601, a control unit 602, and a quantum device 603. The control unit 602 controls the quantum device 603 based on a control signal from the general-purpose computer 601. As the quantum device 603, the quantum device according to any one of the first to fifth embodiments is used. The control unit 602 and the quantum device 603 are housed in a cryostat 604.

It is possible to perform a stable quantum operation by the quantum computer 6.

### (Simulation)

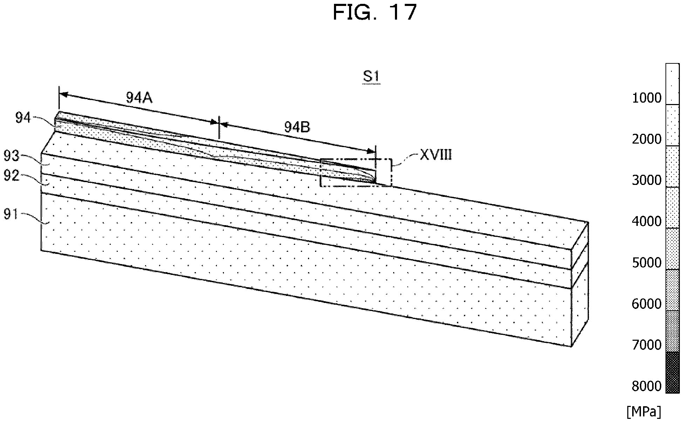

Next, a result of a simulation performed by the inventor of the present application will be described. In this simulation, about seven types of structures S1 to S7, a distribution of internal stress when cooling to 4 K is performed in a case of stress free at 300 K has been calculated. FIGs. 17 to 23 are diagrams illustrating the simulation results.

As illustrated in FIG. 17, in the structure S1, a silicon oxide cladding layer 92 is provided on a sapphire substrate 91, a sapphire second optical waveguide 93 is provided on the cladding layer 92, and a diamond first optical waveguide 94 is provided on the second optical waveguide 93. The first optical waveguide 94 includes a first region 94A and a second region 94B. Heights of the first region 94A and the second region 94B are 200 nm. A width of the first region 94A is 200 nm. A width of the second region 94B linearly decreases from a boundary with the first region 94A toward a front end portion. A length of the second region 94B is 1500 nm.

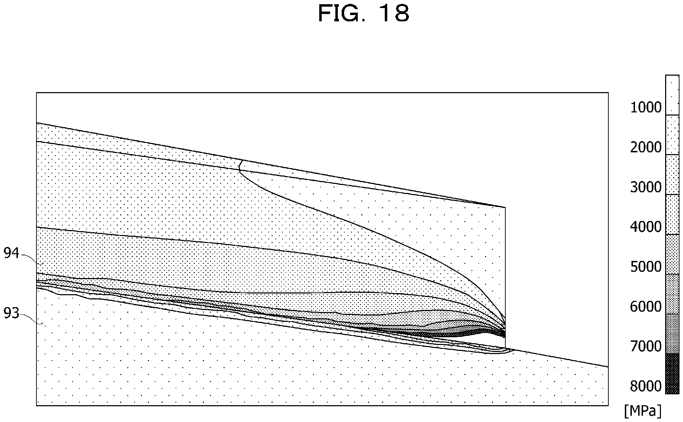

FIG. 18 is an enlarged view of a region surrounded by chain double-dashed line XVIII in FIG. 17. In the simulation result for the structure S1, internal stress at the front end portion of the second region 94B was 55.5 GPa at the maximum.

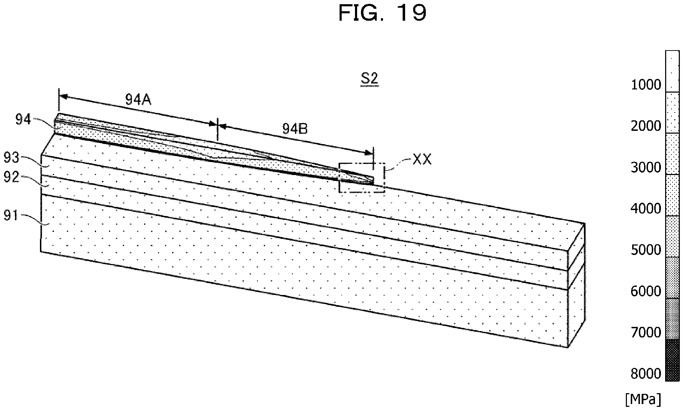

As illustrated in FIG. 19, in the structure S2, the height of the second region 94B linearly decreases from the boundary with the first region 94A toward the front end portion. Other conditions are similar to those of the structure S1.

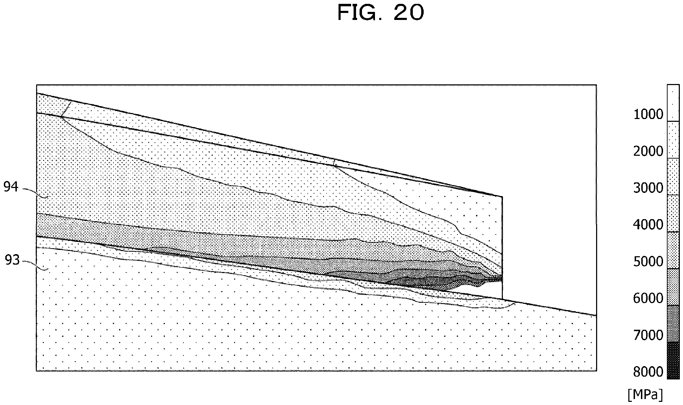

FIG. 20 is an enlarged view of a region surrounded by chain double-dashed line XX in FIG. 19. In the simulation result for the structure S2, the internal stress at the front end portion of the second region 94B was 25.0 GPa at the maximum.

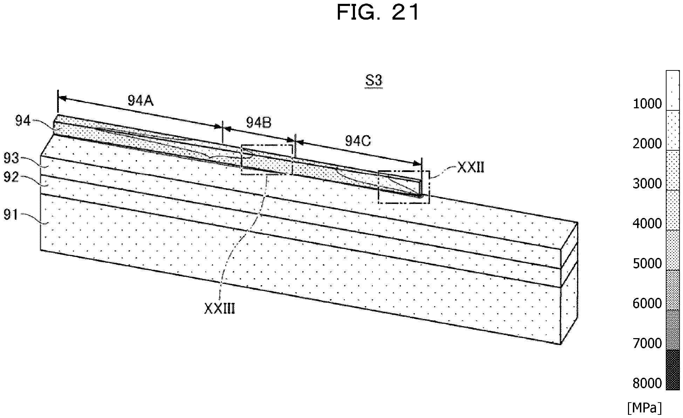

As illustrated in FIG. 21, in the structure S3, the first optical waveguide 94 includes a third region 94C, in addition to the first region 94A and the second region 94B. A height of the third region 94C is 200 nm, and a width of the third region 94C is 100 nm. The width of the second region 94B linearly decreases from 200 nm to 100 nm from the boundary with the first region 94A to a boundary with the third region 94C. The length of the second region 94B is 500 nm, and a length of the third region 94C is 1000 nm. Other conditions are similar to those of the structure S1. The structure S3 follows the structure in the first embodiment.

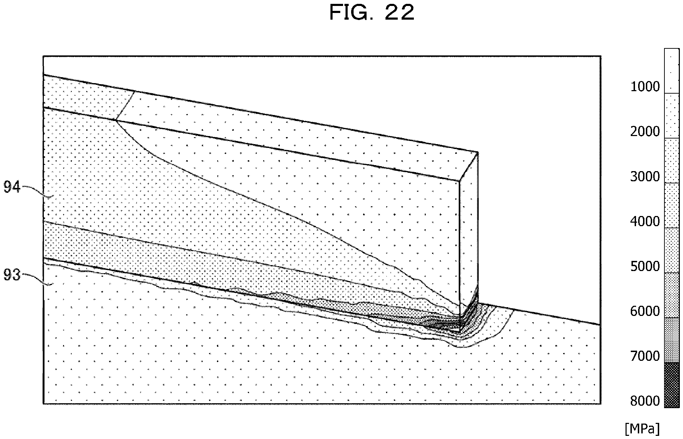

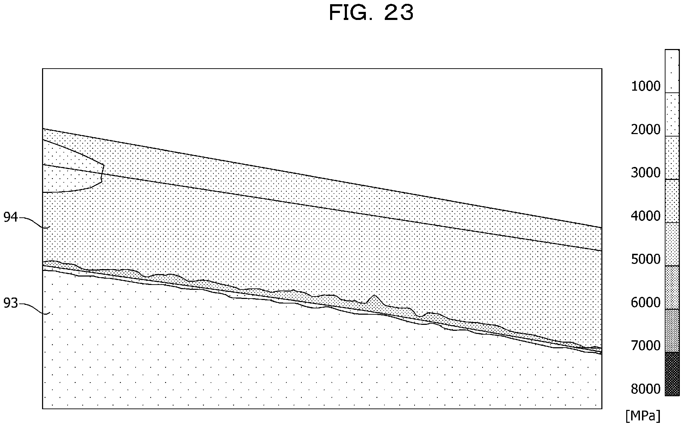

FIG. 22 is an enlarged view of a region surrounded by chain double-dashed line XXII in FIG. 21. FIG. 23 is an enlarged view of a region surrounded by chain double-dashed line XXIII in FIG. 21. In the simulation result for the structure S3, internal stress at the front end portion of the third region 94C was 8.0 GPa at the maximum, and the internal stress of the second region 94B was 5.0 GPa at the maximum.

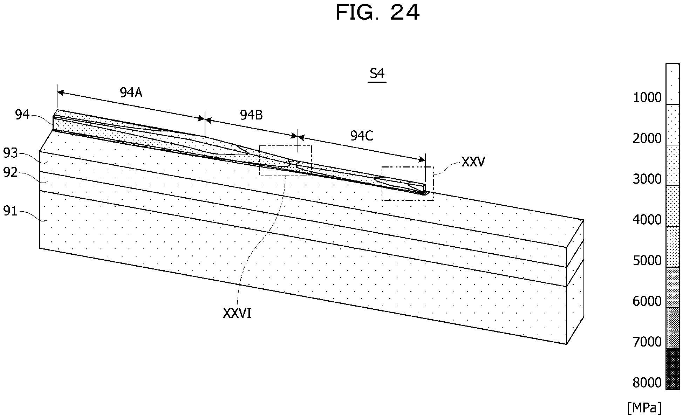

As illustrated in FIG. 24, in the structure S4, the height of the third region 94C is 100 nm. Furthermore, the height of the second region 94B linearly decreases from 200 nm to 100 nm from the boundary with the first region 94A to the boundary with the third region 94C. Other conditions are similar to those of the structure S3. The structure S4 follows a structure in which the front end portion of the third region 313 is a plane in the fourth embodiment.

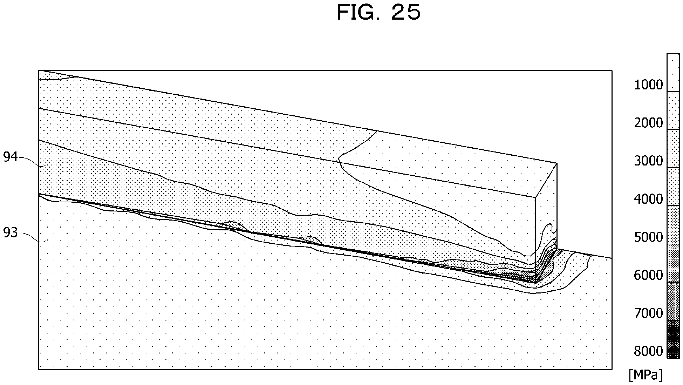

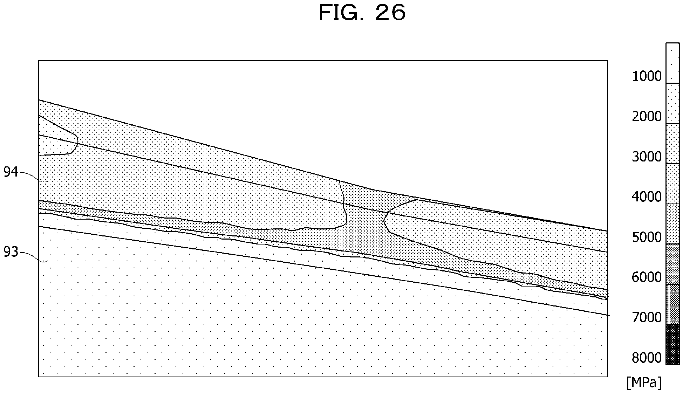

FIG. 25 is an enlarged view of a region surrounded by chain double-dashed line XXV in FIG. 24. FIG. 26 is an enlarged view of a region surrounded by chain double-dashed line XXVI in FIG. 24. In the simulation result for the structure S4, the internal stress at the front end portion of the third region 94C was 6.2 GPa at the maximum, and the internal stress of the second region 94B was 5.0 GPa at the maximum.

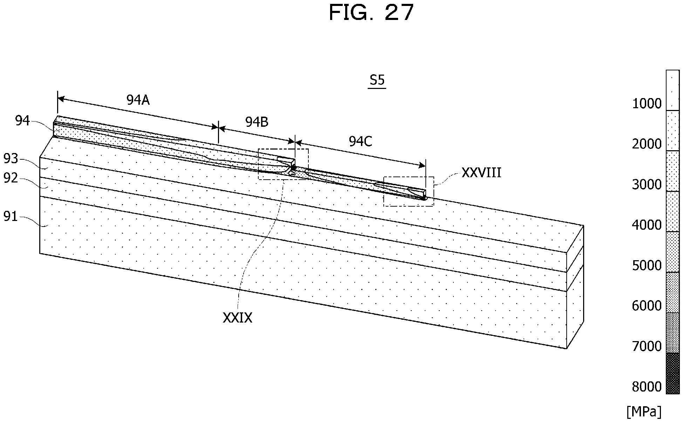

As illustrated in FIG. 27, in the structure S5, the height of the third region 94C is 100 nm. Other conditions are similar to those of the structure S3. The structure S5 follows a structure in which the front end portion of the third region 313 is a plane in the third embodiment.

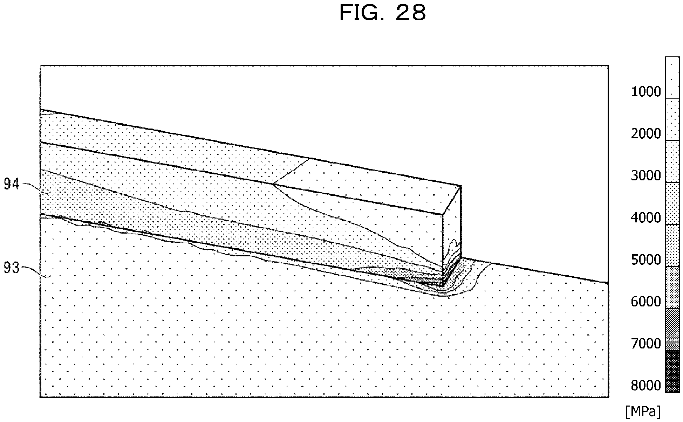

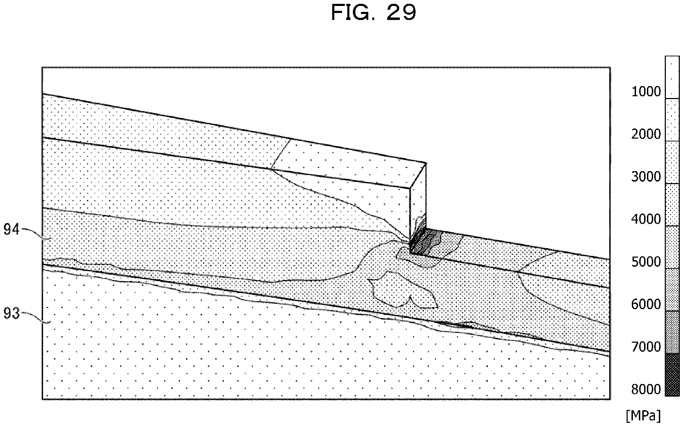

FIG. 28 is an enlarged view of a region surrounded by chain double-dashed line XXVIII in FIG. 27. FIG. 29 is an enlarged view of a region surrounded by chain double-dashed line XXIX in FIG. 27. In the simulation result for the structure S5, internal stress at the front end portion of the third region 94C was 6.0 GPa at the maximum, and the internal stress of the second region 94B was 8.6 GPa at the maximum.

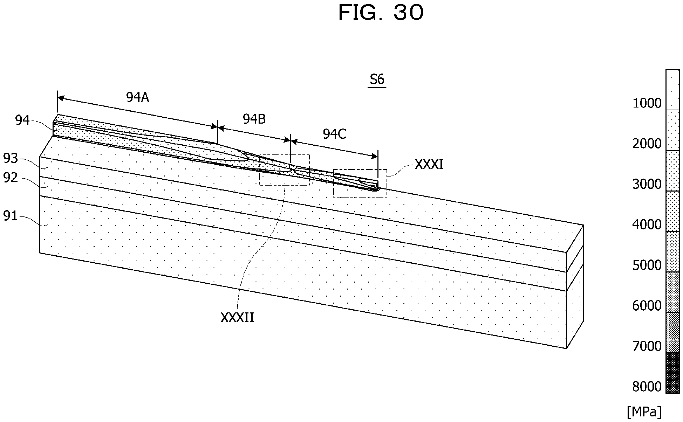

As illustrated in FIG. 30, in the structure S6, the front end portion of the third region 313 is a curved surface. Other conditions are similar to those of the structure S4. The structure S6 follows the structure in the fourth embodiment.

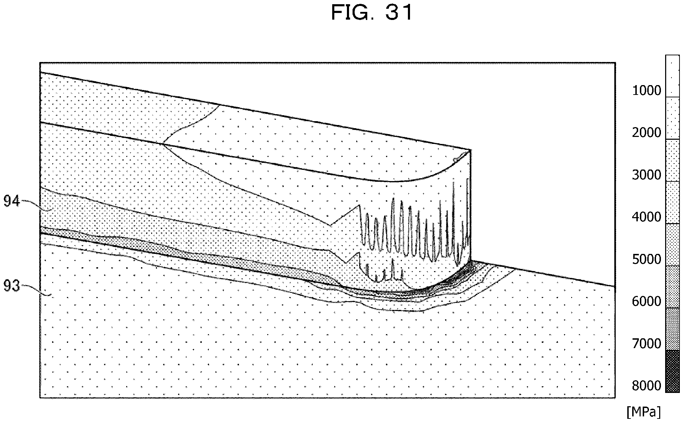

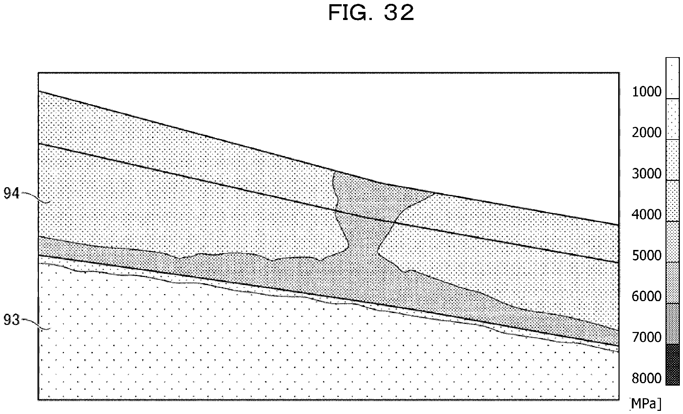

FIG. 31 is an enlarged view of a region surrounded by chain double-dashed line XXXI in FIG. 30. FIG. 32 is an enlarged view of a region surrounded by chain double-dashed line XXXII in FIG. 30. In the simulation result for the structure S6, the internal stress at the front end portion of the third region 94C was 9.0 GPa at the maximum, and the internal stress of the second region 94B was 4.0 GPa at the maximum.

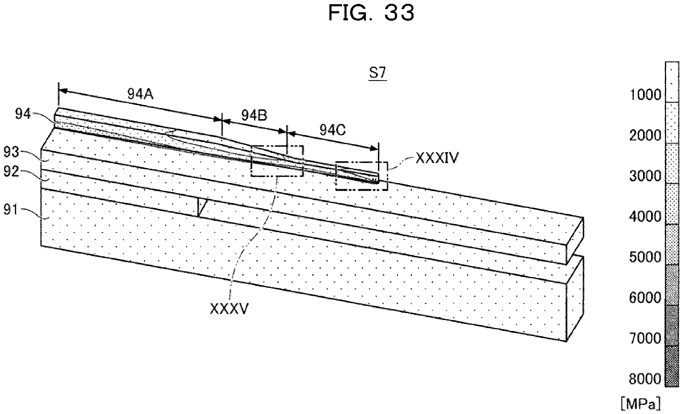

As illustrated in FIG. 33, in the structure S7, a hollow portion 95 is formed in the cladding layer 92. Other conditions are similar to those of the structure S6. The structure S7 follows the structure in the fifth embodiment.

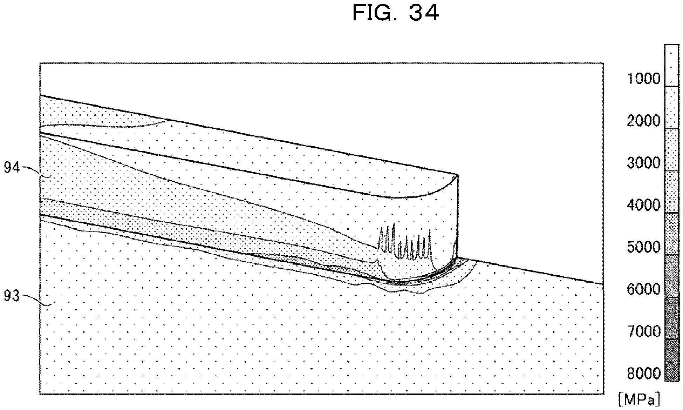

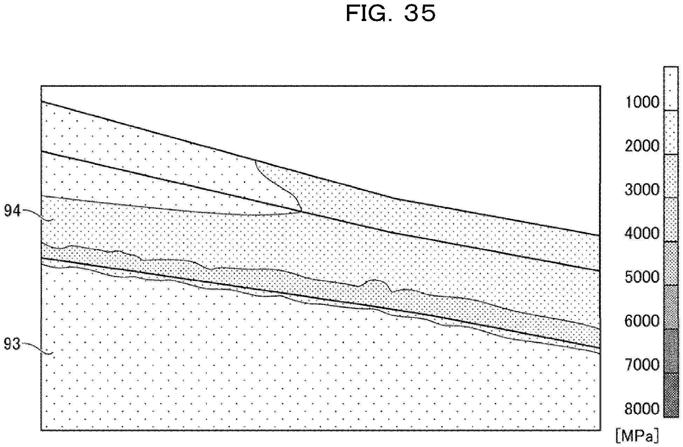

FIG. 34 is an enlarged view of a region surrounded by chain double-dashed line XXXIV in FIG. 33. FIG. 35 is an enlarged view of a region surrounded by chain double-dashed line XXXV in FIG. 33. In the simulation result for the structure S7, the internal stress at the front end portion of the third region 94C was 6.0 GPa at the maximum, and the internal stress of the second region 94B was 3.0 GPa at the maximum.

In this way, through the simulation, a result indicating that the internal stress in the second region 94B is significantly lower in the structures S3 to S7 than in the structures S1 and S2 is obtained.

Although the preferred embodiments and the like have been described in detail above, the present disclosure is not limited to the embodiments and the like described above, and various modifications and substitutions may be made to the embodiments and the like described above without departing from the scope described in claims.

### CITATION LIST

### PATENT DOCUMENT

Patent Document 1: Japanese Laid-open Patent Publication No. 2005-173162
Patent Document 2: Japanese Laid-open Patent Publication No. 2000-208862
Patent Document 3: U.S. Patent No. 10031293
Patent Document 4: U.S. Patent No. 6539157

### NON-PATENT DOCUMENT

Non-Patent Document 1: H. Bernien, et al., "Heralded entanglement between solid-state qubits separated by three metres", Nature 497, 86 (2013)
Non-Patent Document 2: Michael J. Burek, et al., "Fiber-Coupled Diamond Quantum Nanophotonic Interface", Phys. Rev. Applied 8, 024026 (2017)

### REFERENCE SIGNS LIST

1, 2, 3, 4, 5, 603 quantum device
6 quantum computer
10 first optical waveguide
20 second optical waveguide
51 substrate
52 cladding layer
53 hollow portion
111 first region
112, 412 second region
112A, 112B, 412A, 412B boundary
113, 213, 313 third region

## Claims

1. A quantum device comprising:
a first optical waveguide configured to include diamond; and
a second optical waveguide optically configured to be coupled to the first optical waveguide and include a material with a lower refractive index than diamond, wherein
the first optical waveguide includes
a first region configured to include a color center,
a second region that propagates light that propagates in the first region to the second optical waveguide, and
a third region connected to a side of the second region opposite to the first region and bonded to the second optical waveguide.

2. The quantum device according to claim 1, wherein a cross-sectional area of a cross section perpendicular to a propagation direction of the light in the second region decreases from a boundary with the first region toward a boundary with the third region.

3. The quantum device according to claim 2, wherein a cross-sectional area of a cross section perpendicular to a propagation direction of the light in the third region is equal to or less than a cross-sectional area at a boundary of the second region with the third region.

4. The quantum device according to any one of claims 1 to 3, wherein a width of the second region decreases from the boundary with the first region toward the boundary with the third region.

5. The quantum device according to claim 4, wherein a width of the third region is equal to or less than a width of the second region at the boundary with the third region.

6. The quantum device according to any one of claims 1 to 5, wherein a height of the second region decreases from the boundary with the first region toward the boundary with the third region.

7. The quantum device according to claim 6, wherein a height of the third region is equal to or less than a height of the second region at the boundary with the third region.

8. The quantum device according to any one of claims 1 to 7, wherein a side surface of an end portion of the third region on an opposite side of the second region is a curved surface.

9. The quantum device according to any one of claims 1 to 8, comprising:
a substrate; and
a cladding layer provided on the substrate, wherein
the second optical waveguide is provided on the cladding layer, and
a hollow portion is formed in a portion below the second region of the cladding layer.

10. The quantum device according to claim 9, wherein the hollow portion is formed from the portion below the second region of the cladding layer to a portion below the third region.

11. The quantum device according to any one of claims 1 to 10, wherein the second optical waveguide includes sapphire, silicon, silicon carbide, silicon nitride, or silicon oxide, or any combination thereof.

12. The quantum device according to any one of claims 1 to 11, wherein
a height of the first region is 150 nm to 300 nm, and
a width of the first region is 150 nm to 300 nm.

13. A quantum operation device comprising: the quantum device according to any one of claims 1 to 12.
